# EUROPEAN PATENT APPLICATION

(11) **EP 4 549 615 A1**
(43) Date of publication of application: **07.05.2025**
(21) Application number: 24201279.7
(22) Date of filing: 19.09.2024
(51) Int. Cl.: C25B 1/02, C25B 9/09, C25B 9/17, C25B 9/19, C25B 9/70, C25B 11/02, C25B 11/047, C25B 13/02, C25B 13/07, C25B 15/08, C25C 3/04, C25C 3/06, C25C 3/08, C25C 3/12, C25C 3/28, C25C 3/34, C25C 5/04, C25C 7/00, C25C 7/02

(54) **REACTOR DEVICE FOR CONVERTING POWDERED METAL OXIDES AND CONVERSION SYSTEM COMPRISING SAME**

(30) Priority: 01.11.2023 US 202318386075
(71) Applicant: Airbus Defence and Space GmbH, 82024 Taufkirchen (DE); Fraunhofer-Gesellschaft zur Förderung der angewandten Forschung e.V., 80686 München (DE)
(72) Inventor: SEIDEL, Achim, 82024 Taufkirchen (DE); PAL, Uday B., Framingham, MA 01701 (US); PÖHLE, Georg, 01309 Dresden (DE); REDLICH, Christian, 01159 Dresden (DE)
(74) Representative: LKGLOBAL Lorenz & Kopf Patentanwalt Attorney at Law PartG mbB

(57) **Abstract**

The present disclosure relates to a reactor device (2) for converting powdered metal oxides, in particular metal oxides contained in regolith, to metal powder and molecular oxygen (O₂), the reactor device (2) comprising a cathode reactor vessel (8) providing a receiving space (14) for the powdered metal oxides and adapted to be connected to an electron source (21) such that the powdered electrode oxides can be converted to the metal powder and oxygen ions (O²⁻) by the application of an electrical potential, and an anode reactor vessel (4) adapted to be connected to an electron sink (22) to attract the oxygen ions (O²⁻) travelling through an electrolyte (6) from the cathode reactor vessel (8) to the anode reactor vessel (4) during operation of the reactor device (2); wherein the anode reactor vessel (4) at least partially surrounds the cathode reactor vessel (8). Furthermore, the present disclosure relates to a conversion system (1) for converting powdered metal oxides, in particular metal oxides contained in regolith, to a metal powder and molecular oxygen (O₂), the conversion system (1) comprising at least one corresponding reactor device (2).

## Description

### Technical Field

The disclosure relates to a miniaturized system and a method for extracting oxygen and metals from powdered metal oxides. In particular, the present disclosure relates to a reactor device for converting powdered metal oxides, in particular metal oxides contained in regolith, to metal powder and molecular oxygen. Furthermore, the present disclosure relates to a conversion system for converting powdered metal oxides, in particular metal oxides contained in regolith, to a metal powder and molecular oxygen.

### Background of the Invention

Various electrolysis devices having at least one cathode, which partially delimits a receiving area provided for receiving an oxide-containing feedstock in at least one operating condition and having at least one anode are already known from the prior art.

Devices to produce metals and transition metals are exemplarily known from GB 2 534 332 A, EP 3 161 189 B1 and EP 2 935 656 B1. They operate by direct reduction of solid or powdered oxide-containing starting materials. Established electrolytic devices and electrolytic processes, such as the SOM process (see e.g. US 5,976,345 A and US 6,299,742 B1), or FFC process, are aimed in particular at the chemical reduction of metal oxides and transition metal oxides for the production of pure metals or alloys, for example for the production of magnesium, aluminium, silicon, titanium, or tantalum from their oxides.

The respective starting material is in electrical contact with a cathode, with molten halide salts used as an electrolyte. A respective anode assembly typically consists of a graphite or metallic rod, or an oxygen ion-conducting membrane in contact with an appropriate anode and anode current collector. US 8,066,861 B1 and DE 101 56 349 A1 describe electrolysis devices, in which an oxygen-ion-conducting membrane is used as part of the anode structure, which is thus not consumed by the process. A DC voltage is applied between the cathode and the anode assembly at a working temperature of typically 500°C to 1400°C. The electrochemical processes reduce the starting material to pure metal or alloy at the cathode, and oxygen or an oxygen product is produced at the anode.

Above-mentioned US 5,976,345 A and US 6,299,742 B1 describe electrolysis devices, in which the respective anode assemblies comprise an anode/current collector and an oxygen-ion-conducting membrane, which separates the respective anode from the electrolyte. Thus, the oxygen is separated from the electrolysis cell, and high-purity oxygen is directly produced. To increase the lifetime of a ceramic anode, the composition of the salt electrolyte is matched to the ceramic oxygen-ion conducting membrane. Fluoride salt mixtures have been proven to be suitable for this application. For the industrial production of metals, devices and processes are used in which several bipolar electrochemical cells are connected in series in an electrolyte bath.

From EP 2 430 216 B1, EP 2 640 871 B1, EP 2 764 137 B1 and EP 2 640 872 B1, continuous processes are known in which the electrolyte bath or the device is typically provided open to its/their surroundings at two points for the introduction and removal of freshly loaded cells or cell stacks. Furthermore, an integrated solution is known from WO 2017/203245 A1, consisting of devices and processes for the electrolytic production of metal powders and direct further processing by means of additive manufacturing processes.

US 6,299,742 B1 and US 5,976,345 A describe an in-situ apparatus and technique for measuring the concentrations and transport properties of easily dissociable oxides in slags, utilizing an electrolyte to separate a reference-gas compartment from the slag of interest. A method and apparatus for metals extraction is also described, which includes a vessel for holding a molten electrolyte.

An oxygen-producing inert anode is described in US 2009/0000955 A1 or WO 2007/011669 A2, respectively. Here, the anode consists of liquid metal silver and stabilized zirconia composites. It is in contact with an oxygen-ion conducting membrane. A cathode positioned to contact a metal oxide is also in contact with the membrane. When a potential is applied between the cathode and the anode, the oxygen species of the electrolyte is transported across the ion-conducting membrane and is oxidized at the anode, and the metallic species are reduced at the cathode.

Furthermore, CN 101302630 B relates to a method for preparing metal by a solid oxide electrolyte bath with the following steps: in the electrolyte bath formed by a metal oxide cathode, solid oxide electrolytes and a composite material anode based on oxides with perovskite structure, the cathode end is injected with inert gases and the anode end is inserted with an air pipe, and the electrolyte bath is heated; the cathode end and the anode end are electrified for electrolysis, and oxygen with a purity of more than 99.9 percent can be collected on the anode end; after electrolysis, metals with purity of more than 99 percent can be collected on the cathode end. The method avoids the corrosion dissolution of the carbon anode and the possible generation of greenhouse gasses such as carbon dioxide, etc.

JP 4511498 B2 describes a method for producing tantalum (Ta) or niobium (Nb) powder for a capacitor in an electrolytic reduction reactor including an anode, a cathode and a molten salt. The method comprises a stage where, in a molten salt composed of the halide of at least one metal selected from alkali metals and alkaline-earth metals, and alkali metal oxide, the alkali metal oxide is subjected to primary electrolytic reduction at the cathode, and tantalum pentoxide (Ta₂O₅) or niobium pentoxide (Nb₂O₅) is partially reduced with the electrolytically reduced alkali metal, so as to obtain tantalum or niobium oxide expressed by Ta₂O_{(5-y)} or Nb₂O_{(5-y)} (wherein, y=2.5 to 4.5); and a stage where the halide of at least one metal selected from alkali metals and alkaline-earth metals is subjected to primary electrolytic reduction at the cathode, and is brought into secondary reduction reaction with tantalum or niobium oxide expressed by Ta₂O_{(5-y)} or Nb₂O_{(5-y)} (wherein, y=2.5 to 4.5), so as to obtain tantalum or niobium powder.

US 6 540 902 B1 refers to a method of controlling the direct electrolytic reduction of a metal oxide or mixtures of metal oxides to the corresponding metal or metals. A non-consumable anode and a cathode and a salt electrolyte with a first reference electrode near the non-consumable anode and a second reference electrode near the cathode are used. Oxygen gas is produced and removed from the cell. The anode potential is compared to the first reference electrode to prevent anode dissolution and gas evolution other than oxygen, and the cathode potential is compared to the second reference electrode to prevent production of reductant metal from ions in the electrolyte.

WO 2016/061577 A1 or US 2016/108532 A1, respectively, relate to apparatuses and methods for connecting a liquid first metal cathode to a current source of an electrolytic cell comprising a conduit having a first and second end, liquid first metal disposed at the first end of the conduit, a solid first metal disposed at the second end of the conduit, and a solid conductor portion in electrical contact with the solid first metal.

Extra-terrestrial applications, i.e., applications in space, including sustainable exploration of space as well as other planets than planet Earth, require technologies that enable the use of locally available resources, ideally in their naturally occurring form. Of interest are space-qualified technologies to produce oxygen, water, and fuel from materials present on the Moon, Mars, or in and/or on asteroids. The term "space-qualified" is to be understood as referring to a reusable, low-wear/maintenance device, a process without the use of consumables, and devices with a lightweight and compact design and/or high energy and/or material efficiency.

Of particular interest for extra-terrestrial applications are technologies for producing oxygen and/or water from oxide containing rock, especially lunar regolith, Martian rock, especially Martian regolith, or asteroidal rock, which is generally available in powdered form with grain sizes typically ranging from the µm up to the mm range. For the reduction of such powdered oxides, a dedicated porous cathode has been described in e.g., EP 3 812 483 A1 or US 2021/123148 A1, respectively. Here, the cathode comprises the respective oxide powder, but allows the molten halide electrolyte to pass through. The reduction of the oxides occurs at the triple-phase boundary, where the oxide, the halide salt and the cathode are in contact with each other. As the reaction progresses, more oxide is reduced to metal and becomes part of the cathode. This way the reaction progresses into the oxide material until all the oxide material is reduced to metal or the reaction is stopped for other reasons.

Of particular interest for extra-terrestrial but also for terrestrial applications are technologies that maximize the efficiency of the process and simultaneously minimize the volume and mass of the system. For example, Lomax, Bethany A. et al. "Proving the viability of an electrochemical process for the simultaneous extraction of oxygen and production of metal alloys from lunar regolith", Planetary and Space Science, Pergamon Press, Oxford, GB, vol. 180, doi:10.1016/J.PSS.2019.104748, ISSN 0032-0633, (20190919), XP086043007, describe the development of an efficient process to simultaneously extract oxygen and metals from lunar regolith by way of in-situ resource utilisation (ISRU) having the potential to enable sustainable activities beyond Earth. They refer to the Metalysis-FFC (Fray, Farthing, Chen) process that has recently been proven for the industrial-scale production of metals and alloys, leading to the present investigation into the potential application of this process to regolith-like materials.

CN 108505070 B proposes a method for extracting oxygen and metals from lunar regolith. The metal and oxygen are extracted from lunar regolith through vacuum thermal decomposition-inert anode molten salt electrolysis. The steps are as follows: (1) Under vacuum atmosphere, the lunar soil or simulated lunar soil is heated to 2000-3000°C and kept warm for 2-6 hours. This will cause the lunar soil or simulated lunar soil to vaporize and undergo a decomposition reaction to generate oxygen and low-priced metal oxides. (2) After thermal decomposition is completed, the by-product oxides are collected, added to lithium cryolite molten salt, and an inert anode is used to electrochemically separate the oxides at 720 to 800°C and a current density of 0.6 to 1.4 A/cm². The cathode obtains the alloy, and the anode obtains oxygen. (3) The collected oxygen is purified and liquefied and stored for later use; at the same time, the metal products obtained by electrolysis are extracted from the electrolytic tank in batches and cast into shapes for later use.

EP 4 170 066 A2 refers to a method for extracting metal and oxygen from powdered metal oxides in electrolytic cell, the electrolytic cell comprising a container, a cathode, an anode and an oxygen-ion-conducting membrane, the method comprising providing a solid oxygen ion conducting electrolyte powder into a container, providing a feedstock comprising at least one metal oxide in powdered form into the container, applying an electric potential across the cathode and the anode, the cathode being in communication with the electrolyte powder and the anode being in communication with the membrane in communication with the electrolyte powder, such that at least one respective metallic species of the at least one metal oxide is reduced at the cathode and oxygen is oxidized at the anode to form molecular oxygen, wherein the potential across the cathode and the anode is greater than the dissociation potential of the at least one metal oxide and less than the dissociation potential of the solid electrolyte powder and the membrane.

EP 4 170 067 A2 describes a system for extracting oxygen from powdered metal oxides, the system comprising a container comprising an electrolyte in the form of meltable or molten salt, at least one cathode, at least one anode, a power supply, and a conducting structure, wherein the cathode is shaped as a receptacle having a porous shell, which has an upper opening, the cathode being arranged in the electrolyte with the opening protruding over the electrolyte, wherein the conducting structure comprises a plurality of conducting elements and gaps between the conducting elements, wherein the power supply is connectable to the at least one cathode and the at least one anode to selectively apply an electric potential across the cathode and the anode, wherein the conducting structure is insertable into the cathode, such that the conducting elements reach into an inner space of the cathode, wherein the conducting structure is electrically connectable to the cathode, and wherein the system is adapted for reducing at least one respective metallic species of at least one metal oxide of feedstock inside the shell of the cathode with inserted conducting structure by applying the electric potential, wherein the potential is greater than the dissociation potential of the at least one metal oxide.

The above-mentioned systems and methods for gaining oxygen and metals from powdered metal oxides are not fully satisfying, in particular for extra-terrestrial applications, in view of a relatively high weight to output ratio of the systems and devices involved. This is particularly relevant in view of very high costs of transporting wares and goods into and within space. For example, the costs for lifting a kilogram of wares and goods from planet Earth into space, for example to the moon, can currently cost up to E1 million.

### Summary of the Invention

Consequently, it may be seen as an object underlying the present invention to provide an alternative generic electrolysis system which meets all requirements with regard to ISRU, including for extra-terrestrial applications. In particular, it is an object underlying the present invention to provide a system with a relatively low weight to output ratio. Moreover, such a system is supposed to be "space-qualified" or at least must have a basic configuration, that may be suitable for becoming "space-qualified" without undue burden. These objects are at least partially achieved by the subject-matter of the independent claims.

A reactor device is provided for converting powdered metal oxides, in particular metal oxides contained in regolith, to metal powder and molecular oxygen, the reactor device comprising a cathode reactor vessel providing a receptacle for the powdered metal oxides and adapted to be connected to an electron source such that the powdered electrode oxides can be converted to the metal powder and oxygen ions by the application of an electrical potential, and an anode reactor vessel adapted to be connected to an electron sink to attract the oxygen ions travelling through an electrolyte from the cathode reactor vessel to the anode reactor vessel during operation of the reactor device; wherein the anode reactor vessel at least partially surrounds the cathode reactor vessel.

A conversion system is provided for converting powdered metal oxides, in particular metal oxides contained in regolith, to a metal powder and molecular oxygen, the conversion system comprising at least one corresponding reactor device.

Such an arrangement particularly allows for miniaturization of the reactor device in order to provide a miniaturized system for extracting metal and oxygen from powdered metal oxides. An advantageous arrangement of the cathode and a SOM-type anode can be implemented. In this arrangement, the SOM-type anode acts as the reaction vessel and contains the halide electrolyte, the cathode and the oxide feedstock. A separate reaction vessel that usually contains the anode, cathode, oxide feedstock, and halide electrolyte in other implementations of molten salt electrolysis is therefore no longer needed. As a result, the mass and volume of the system can be significantly reduced compared to other implementations of the process.

Further developments and advantageous embodiments can be derived from the dependent claims and the following description. Features described with reference to the reactor device and the conversion system may be implemented as method steps, or vice versa. Therefore, the description provided in the context of the reactor device and the conversion system applies in an analogous manner also to respective methods for converting powdered metal oxides, in particular metal oxides contained in regolith, to metal powder and molecular oxygen. The functions of the reactor device and the conversion system as well of their components and elements may be implemented as steps of methods and method steps may be implemented as functions of the reactor device and the conversion system.

According to an embodiment of the reactor device, the cathode reactor vessel is at least partially received in the anode reactor vessel. The cathode reactor vessel may be integrated into the anode reactor vessel with a gap or intermediate space for taking up the electrolyte therebetween. Such an integrated arrangement of the cathode reactor vessel and the anode reactor vessel allows for a particularly compact design of the reactor device allowing for a high degree of miniaturization.

According to an embodiment of the reactor device, the anode reactor vessel circumferentially encompasses the cathode reactor vessel. The anode reactor vessel and the cathode reactor vessel can be arranged coaxially with respect to each other. This allows for a highly efficient design of the reactor device, both regarding weight to output ratio, and regarding its outer dimensions, thus further enabling a high degree of miniaturization.

According to an embodiment of the reactor device, the anode reactor vessel at least partially holds the electrolyte. The free space provided between the cathode reactor vessel and the anode reactor vessel may be formed and designed such that an amount of electrolyte necessary for operating the rector device may be minimised. Thereby, the efficiency of the reactor device, and thus the degree of its miniaturisation, may be further improved.

According to an embodiment of the reactor device, the anode reactor vessel contains the electrolyte. The electrolyte can be a molten salt. The anode reactor vessel can thereby fulfil the double function in that it serves for holding the electrolyte on its inside and for generating molecular oxygen on its outside. This again helps in providing a highly efficient design of the reactor device, both regarding weight to output ratio, and regarding its outer dimensions, thus further enabling a high degree of miniaturization.

According to an embodiment of the reactor device, an anode reactor wall of the anode reactor vessel is at least partially permeable to allow a diffusion of oxygen ions through the anode reactor wall. The anode reactor wall particularly can have a highly selective permeability for oxygen ions. Thereby, preferably only the oxygen ions can travel from the inside to the outside of the anode reactor vessel, thus allowing for high degree of purity of the generated molecular oxygen.

According to an embodiment of the reactor device, the anode reactor vessel is at least partially formed of an oxygen ion conducting ceramic material to allow for a transfer of the oxygen ions towards an oxygen collection container located outside of the anode reactor vessel. Such a ceramic material can be particularly advantageous in that it is inert to any chemical reactions taking place in and around the anode reactor vessel. On the one hand, this again allows for high degree of purity of the generated molecular oxygen. On the other hand, a high chemical stability of the anode reactor vessel is provided. This helps in providing a preferably long lifetime of the reactor device.

According to an embodiment of the reactor device, at least a section of an anodic outer surface of the anode reactor vessel is covered by an anodic electrode connecting material. The anodic electrode connecting material may facilitate electrically connecting the anode reactor vessel to the electron sink. By covering the anodic outer surface of the anode reactor vessel with the anodic electrode connecting material, oxygen ions travelling from the inside to the outside of the anode reactor vessel may shed electrons in the region of the anodic outer surface in order to form molecular oxygen. Thus, molecular oxygen is generated at the outside of the anodic reactor vessel and can there be collected and harvested.

According to an embodiment of the reactor device, the anodic electrode connecting material is at least partially provided as a paste applied to the anodic outer surface. As a paste, the anodic electrode connecting material can at least partially provide the anodic outer surface of the anode reactor vessel being closely connected to the material of the anode reactor vessel itself with high electrical conductivity. This helps in establishing an efficient electrical connection between the electron sink and the anode reactor vessel The paste can be provided as a porous and/or perforated coating. The porous and/or perforated structure allows molecular oxygen formed at the outside of the anode reactor vessel to escape in order to be then collected and harvested.

According to an embodiment of the reactor device, the anodic electrode connecting material is at least partially provided as composite material composed of ceramic and metal materials. For example, the paste partially constituting the anodic electrode connecting material may contain ceramic particles and/or platinum. In combining ceramic and metal materials, on the one hand, ceramic materials may provide the desired porosity and at the same time chemical stability. On the other hand, metal materials can be chosen in order to provide the desired high electrical conductivity. Using platinum as a metal has the advantage that it provides both, high chemical stability plus electrical conductivity.

According to an embodiment of the reactor device, the anodic electrode connecting material is at least partially provided as a mesh. The mesh may contain silver. The mesh can be formed as a netting, shell, coat, sleeve, and/or woven layer, at least providing perforations in order to let the molecular oxygen pass through the mesh. Thus, the mesh can at the same time provide the desired electrical conductivity in order to form the molecular oxygen in the anodic outer surface of the anode reactor vessel and allow the molecular oxygen to escape through the mesh to be then collected and harvested.

According to an embodiment of the reactor device, the anodic electrode connecting material is at least partially provided as a bath. The anode reactor vessel can be at least partially submerged in the bath which may be provided as liquid. Providing the anodic electrode connecting material as a bath thus can be advantageous in that a close electrical connection with high electric conductivity may be established between the anode reactor vessel and the electron sink while molecular oxygen formed at the outside of the anode reactor vessel may escape as bubbles through the bath in order to be then collected and harvested.

According to an embodiment of the reactor device, the bath contains molten metal. The molten metal can contain silver. In providing that the bath contains molten metal and/or is constituted of molten metal, a highly conductive electrical connection may be established between the electron sink and the anode reactor vessel.

According to an embodiment of the conversion system, the conversion system may further comprise a powder cartridge configured to be inserted into the cathode reactor vessel and to hold the powdered metal oxides during conversion. The powder cartridge can have a standard configuration such that its insertion and removal from the cathode reactor vessel is simplified, while it allows for convenient filling with powdered metal oxides and removal of metals. This helps in facilitating the charge the reactor device with powdered metal oxides and gather the produced metals.

According to an embodiment of the conversion system, the conversion system may include a container comprising an electrolyte in the form of meltable or molten salt, at least one cathode arranged at, provided in the form of and/or comprising the cathode reactor vessel, and a power supply, wherein the container is made from an oxygen ion conducting material in order to provide and/or at least partially serve as the anode reactor vessel, wherein a current collector acting as the anode is attached to the outside of the container, wherein the cathode reactor vessel is shaped as a receptacle having a porous shell, which has an upper opening, the cathode reactor vessel being arranged in the electrolyte with the opening protruding over the electrolyte, wherein the power supply is connectable to the at least one cathode and the anode to selectively apply an electric potential across the cathode and the anode, and wherein the system is adapted for reducing at least one respective metallic species of at least one metal oxide of feedstock inside a shell of the cathode reactor vessel by applying the electric potential, wherein the potential is greater than the dissociation potential of the at least one metal oxide and less than the dissociation potential of the oxygen ion conducting material.

The conversion system may thus be seen as being based on an electrolysis device, which in at least one operating state is provided for carrying out electrolysis, i.e., a redox reaction. Preferably, the conversion system is provided for a particularly recurring electrolytic production of oxygen from oxide-containing starting material, for example in the form of powdered metal oxides, such as regolith. In this regard, the material to be converted may be any kind of mineral and oxide that may particularly be provided in the form of a powder.

The at least one cathode may at least partially delimit a receiving space, which in at least one operating state is provided for receiving the feedstock in the form of metal oxide powder or similar. The cathode may thus be shaped in the form of a cup or a cup-like component. To further reduce the weight and the cost of components, concepts with a net or mesh cathode are conceivable.

The conversion system may further comprise a cover, which is designed for covering a top opening of the container, thereby enclosing a seal with the top opening. The seal provides a sufficient chemical resistance. It is conceivable that the conversion system may be composed of a plurality of individual containers made from oxygen ion conducting materials, wherein each of the individual containers operates as described above. It is further conceivable that the conversion system may be composed of a plurality of exchangeable cathodes.

The conversion system may constitute a single electrolysis cell and a power supply attachable thereto. However, it is also conceivable that the conversion system comprises several electrolysis cells, which are to be understood as units having at least two electrodes each, one of which is designed as a cathode and one of which is designed as a container and anode, and having an electric circuit connecting the two electrodes. In at least one operating state, an electrolyte is arranged inside the container and thereby between the electrodes. The several electrolysis cells may be connected in series or in parallel. A single power supply or a plurality of power supplies less or equal than the number of electrolysis cells may supply the electrolysis cells with the required potential.

The electrolyte may be any ion-conducting substance. Preferably, the electrolyte comprises a meltable or molten salt, in particular a halide salt. It is particularly advantageous if the electrolyte comprises a halide salt. Furthermore, other electrolytes which appear useful to a skilled person are conceivable, such as ionic liquids. The operating temperature may be in a range from about 500°C to about 1400°C, depending on the properties of the oxide feedstock, the electrolyte and the oxygen ion conducting material. By applying the potential, the cathode has a negative polarity, leading to reduction of the metal ions and release of oxygen ions from the metal oxide into the electrolyte.

Since the container providing the anode reactor vessel also acts as an oxygen-ion conducting material, a separate container for the electrolyte 6 is not needed, and the distance between the cathode and the oxygen ion conducting material can be reduced. Both aspects lead to a clear increase in efficiency of the process, i.e., a decrease of energy consumption per unit of product converted and/or produced, to be carried out by the conversion system, and to a clear reduction of conversion system mass and volume.

The anode may be attached to the outside of the container providing the anode reactor vessel as an electrically conducting material that allows the oxidation of the oxygen ions that is transported through the container wall as ionic oxygen and its release as oxygen gas. The anode may be composed of a metallic paste, a metallic mesh, or similar implementations. Platinum paste or silver mesh are particularly advantageous. Other anode materials which appear useful to a skilled person are conceivable, depending on the process temperature. Examples are electronic oxides like those used as cathodes in solid oxide fuel cells such as Lanthanum Manganite, Lanthanum ferrite, Lanthanum cobaltite, etc. The current collector can then be platinum, iridium, or alloys that resist oxidation such as Inconel.

The anode may comprise at least one selective oxygen pump. The oxygen pump may comprise yttria-stabilized zirconia or any other oxygen ion conducting material. The container providing the anode reactor vessel which also acts as a substrate for the anode may also comprise at least one selective oxygen pump, in particular yttria-stabilized zirconia or any other oxygen ion conducting material. In terms of definitions, the anode may comprise the container and/or the anode reactor vessel or may be seen as being attached or connected thereto.

In analogy to the above described conversion system, the invention further relates to a method for extracting oxygen from powdered metal oxides through an electrolysis cell comprising a container comprising an electrolyte in the form of meltable or molten salt, at least one cathode, a power supply, wherein the container is made from an oxygen ion conducting material, wherein a current collector acting as the anode is attached to the outside of the container, wherein the cathode is shaped as a receptacle having a porous shell, which has an upper opening, the cathode being arranged in the electrolyte with the opening protruding over the electrolyte, wherein the power supply is connectable to the at least one cathode and anode to selectively apply an electric potential across the cathode and the anode, and wherein the electrolysis cell is adapted for reducing at least one respective metallic species of at least one metal oxide of feedstock inside the shell of the cathode by applying the electric potential, wherein the potential is greater than the dissociation potential of the at least one metal oxide and less than the dissociation potential of the solid electrolyte.

The feedstock may comprise at least one of a group of materials or a chemical compound including metal oxides, metal oxide compounds, in particular ores and regolith, including titanium oxide, rare earth oxides, iron oxide, silicon oxide. Regolith may comprise several different metal oxide compounds, which may also comprise iron, titanium, aluminium, magnesium, and silicon.

The electrolysis cell may be operated at a temperature greater than about 500 °C. In particular, the electrolysis cell may be operated at a temperature in the range of about 500°C to about 1400°C, depending on the properties of the oxide feedstock, the electrolyte and the oxygen ion conducting material.

The method may further comprise collecting molecular oxygen at the anode. With the method described herein, high-purity oxygen is produced in parallel to metal powder and is to be collected for further use and/or processing at the anode.

### Brief Description of the Figures

In the following, the attached drawings are used to illustrate an exemplary embodiment in more detail. The illustrations are schematic and not to scale. They show:
- Fig. 1: a simplified schematic view of an exemplary embodiment of the conversion system,
- Fig.2: a schematic diagram of steps of an exemplary embodiment of a method for converting powdered metal oxides to metal powder and molecular oxygen.

### Detailed Description of an exemplary Embodiment

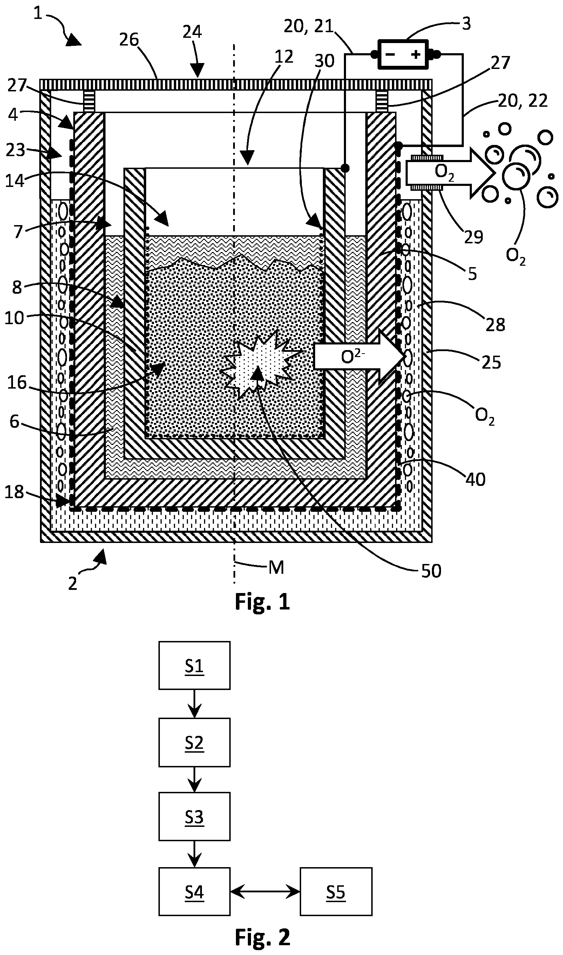

Fig. 1 shows a conversion system 1 for converting powdered metal oxides to metal powder in a schematic view. The conversion system 1 comprises a reactor device 2 and a power source 3. The reactor device 2 comprises a container providing an anode reactor vessel 4 with an anode reactor wall 5 at least partially made from an oxygen ion conducting material. An electrolyte 6 in the form of a molten salt is provided in an intermediate space 7 at least section-wise confined by the anode reactor wall 5. The molten salt may be any suitable molten salt used for electrolytic reduction. For example, the salt may be a halide salt, a suitable mixture of calcium fluoride, magnesium fluoride, and yttrium fluoride, or a calcium chloride salt comprising a portion of calcium oxide.

An anode reactor vessel 4 surrounds the cathode reactor vessel 8 such that the intermediate space 7 this formed therebetween. The cathode reactor vessel 8 may have a cup-like shape, comprises a cathode reactor wall 10, e.g., at least partly provided as a porous shell, and an upper opening 12. Inside the cathode reactor wall 10, a receiving space 14 is defined, which holds a feedstock 16 in the form of or at least containing a metal oxide powder to be reduced. The metal oxide powder may comprise any suitable metal oxide. A number of metal oxides have been reduced using direct electrolytic processes such as the SOM process or FFC process and are known in the prior art, e.g., titanium oxide or tantalum oxide. At least during operation of the reactor device 2, the electrolyte 6 penetrates the cathode reactor wall 10, i.e., at least any porous sections thereof, enters into the receiving space 14 and gets into contact with the feedstock 16. Preferably, the electrolyte 6 soaks the feedstock 16, such that it is saturated with the electrolyte 6.

The anode reactor vessel 4 is provided with a current collector in the form of an anodic electrode connecting material 18 attached to the outside of the anode reactor vessel 4 and acting as and/or providing an anodic outer surface 40, thus as functioning as an oxygen pump. Both, the anodic electrode connecting material 18 and the cathode reactor vessel 8 are connected via at least one power supply line 20 to the power source 3 in order to apply a potential between the cathode reactor vessel 8 and its associated metal oxide on the one hand and the anodic electrode connecting material 18 and thus the anode reactor vessel 4 on the other hand. The power supply line 20 connecting the cathode reactor vessel 8 to the power source 3 constitutes an electron source 21. The power supply line 20 connecting the anodic electrode connecting material 18 to the power source 3 constitutes an electron sink 22.

The anode reactor vessel 4 and a collecting space 23 for collecting molecular oxygen O₂ surrounding it are accessible through a top opening 24 at an upper side of a reactor container 25, through which the interior space of the anode reactor vessel 4 is accessible. The top opening 24 is coverable by the cover 26. At least one sealing element 27 maybe arranged at the cover 26 and/or between the cover 26 and the anode reactor vessel 4, in particular the top rim section thereof, in order to seal up the collecting space 23 with respect to at least the receiving space 14, preferably also with respect to the intermediate space 7. Thereby, the collecting space 23 can be isolated in a gas-tight manner, at least with respect to the receiving space 14. It can thus be prevented that the molecular oxygen O₂ reenters the receiving space 14, where powdered metal oxides contained in the feedstock 16 are supposed to be reduced to metal powder, which would be impaired by any molecular oxygen O₂.

The collecting space 23 may hold a bath 28 which may contain molten metal and may at least partly be contained in the reactor container 25. The produced molecular oxygen O₂ may rise in the bath 28 in the form of bubbles, as depicted in Fig. 1, or in the alternative, if no bath 28 is provided, the collecting space 23 may simply fill up with the molecular oxygen O₂. In any case, the molecular oxygen O₂ may be removed through a duct 29, or alike, for example provided such that it crosses through a wall of the reactor container 25, possibly above the level of the bath 28, if provided, in order to guide the molecular oxygen O₂ towards the outside of the reactor device 2 for harvesting.

On the inside of the cathode reactor vessel 8, the feedstock 16 may be received in a cartridge 30. Upon reduction, the feedstock 16 is converted into a product 50 of the conversion system 1 which contains the metal powder. When the feedstock 16 is converted to the product 50 to a desired degree, e.g., a certain percentage, the cartridge 30 can be conveniently removed from the reactor device 2 in order to be replaced with another cartridge 13 containing again only feedstock 16.

In the schematic view of the conversion system 1 illustrated in Fig. 1, the reactor device 2, the anode reactor vessel 4, electrolyte 6, cathode reactor vessel 8, receiving space 14, anodic electrode connecting material 18, collecting space 23, top opening 24, reactor container 25 and/or cover 28 may be formed symmetrically with respect to a middle axis M of the reactor device 2. In particular, the anode reactor vessel 4, cathode reactor vessel 8, reactor container 25 and/or cartridge 30 may be shaped concentrically with respect to each other and/or to the middle axis M. For example, their outer walls may have a cylindrical or any other kind of complementary shape such that there are nestable within each other, while defining the intermediate space 7, receiving space 14, and/or collecting space 23 between each other.

Fig. 2 shows possible steps of an exemplary method for extracting oxygen from powdered metal oxides through an electrolysis cell provided by the reactor device 2. The method comprises a step S1 of providing the oxygen ion conducting electrolyte 6 into the container, such that the electrolyte 6 at least partially surrounds the shell of the cathode. In a step S2, the feedstock 16 comprising at least one metal oxide in powdered form is inserted through the top opening 24 of the at least one cathode. In a step S3, an electric potential is applied across the cathode and the anode, the cathode being in communication with the electrolyte 6 and the anode being in communication with the electrolyte and the feedstock 16, such that at least one respective metallic species of the at least one metal oxide is reduced at the cathode and oxygen ions O²⁻ are being oxidized at the anode to form molecular oxygen O₂. The electric potential applied across the cathode and the anode is greater than the dissociation potential of the at least one metal oxide and less than the dissociation potential of the electrolyte. The method may further comprise a step S4 of collecting the molecular oxygen at the anode. In a step S5, the product 50 containing the metal powder may be removed and/or exchanged with the feedstock 16.

### Reference Signs

- 1: conversion system
- 2: reactor device
- 3: power source
- 4: anode reactor vessel / container
- 5: anode reactor wall
- 6: electrolyte
- 7: intermediate space
- 8: cathode reactor vessel /cathode
- 10: cathode reactor wall / porous shell
- 12: upper opening
- 14: receiving space
- 16: feedstock
- 18: anodic electrode connecting material / current collector / anode
- 20: power supply lines
- 21: electron source
- 22: electron sink
- 23: collecting space
- 25: reactor container
- 24: top opening
- 26: cover
- 27: sealing element
- 28: bath
- 29: duct
- 30: cartridge
- 40: oxygen pump
- 50: product

- M: middle axis

- S1: provide electrolyte powder
- S2: insert feedstock
- S3: apply electric potential
- S4: collect molecular oxygen
- S5: remove product

### Aspects

1. A miniaturized system for extracting oxygen from powdered metal oxides, the system comprising:
   - a container made from oxygen ion conducting material comprising
   - an electrolyte,
   - an anode current collector attached to the outside of the container
   - at least one cathode that is placed inside the container,
   - a power supply, and

   wherein the cathode is shaped as a receptacle having a porous shell, which has an upper opening, the cathode being arranged in the electrolyte with the opening protruding over the electrolyte,
   wherein the power supply is connectable to the at least one cathode and the current collector to selectively apply an electric potential across the cathode and the anode,
   wherein the system is adapted for reducing at least one respective metallic species of at least one metal oxide of feedstock inside the shell of the cathode by applying the electric potential, wherein the potential is greater than the dissociation potential of the at least one metal oxide
   wherein the cathode may be removable or exchangeable while the system is at the process temperature
   wherein several current collectors may be placed on the surface of the container made from oxygen ion conducting material, that are not in direct electrical contact with each other
2. The system according to aspect 1, wherein the electrolyte comprises a meltable or molten salt.
3. The system according to aspect 2, wherein the electrolyte comprises a halide salt.
4. The system according to aspect 1, wherein the anode comprises at least one selective oxygen pump.
5. The system according to aspect 4, wherein the oxygen pump comprises yttria-stabilized zirconia or other oxygen ion conducting material.
6. The system according to aspect 1, further comprising a cover, which is designed for covering a top opening of the container, thereby enclosing a seal with the top opening.
7. The system according to aspect 1, expanded to be comprised of several miniaturized cell as described, running in parallel or in series, with individual exchangeable cells or cells with exchangeable cathodes filled with metal oxide
8. Method for extracting oxygen from powdered metal oxides through an electrolysis cell, the method comprising
   - a container comprising an electrolyte in the form of meltable or molten salt,
   - at least one cathode,
   - a container made from an oxygen ion conducting material, wherein a current collector acting as the anode is attached to the outside of the container,
   - a cathode that is shaped as a receptacle having a porous shell, which has an upper opening, the cathode being arranged in the electrolyte with the opening protruding over the electrolyte,
   - a power supply that is connectable to the at least one cathode and anode to selectively apply an electric potential across the cathode and the anode,
   - an electrolysis cell that is adapted for reducing at least one respective metallic species of at least one metal oxide of feedstock inside the shell of the cathode by applying the electric potential, wherein the potential is greater than the dissociation potential of the at least one metal oxide and less than the dissociation potential of the solid electrolyte.
9. The method according to aspect 8, wherein the feedstock comprises at least one of a group of materials or a chemical compound including metal oxides, metal oxide compounds, in particular ores and regolith, including titanium oxide, rare earth oxides, iron oxide, silicon oxide. Regolith may comprise several different metal oxide compounds, which may also comprise iron, titanium, aluminum, magnesium, and silicon.
10. The method according to aspect 9, wherein the electrolyte comprises a meltable or molten salt, in particular a halide salt.
11. The method according to aspect 8, wherein the anode comprises at least one selective oxygen pump, in particular yttria-stabilized zirconia or another oxygen ion conducting material.
12. The method according to aspect 8, wherein the electrolysis cell is operated at a temperature greater than about 500 °C.
13. The method according to aspect 7, wherein the electrolysis cell is operated at a temperature in the range of about 500°C to about 1400°C, depending on the properties of the oxide feedstock, the electrolyte and the oxygen ion conducting material.
14. The method according to aspect 7, further comprising collecting molecular oxygen at the anode.

## Claims

1. Reactor device (2) for converting powdered metal oxides, in particular metal oxides contained in regolith, to metal powder and molecular oxygen (O₂), the reactor device (2) comprising
a cathode reactor vessel (8) providing a receiving space (14) for the powdered metal oxides and adapted to be connected to an electron source (21) such that the powdered electrode oxides can be converted to the metal powder and oxygen ions (O²⁻) by the application of an electrical potential, and
an anode reactor vessel (4) adapted to be connected to an electron sink (22) to attract the oxygen ions (O²⁻) travelling through an electrolyte (6) from the cathode reactor vessel (8) to the anode reactor vessel (4) during operation of the reactor device (2);
wherein the anode reactor vessel (4) at least partially surrounds the cathode reactor vessel (8).

2. Reactor device (2) according to claim 1, wherein the cathode reactor vessel (8) is at least partially received in the anode reactor vessel (4).

3. Reactor device (2) according to claim 1 or 2, wherein the anode reactor vessel (4) circumferentially encompasses the cathode reactor vessel (8).

4. Reactor device (2) according to at least one of claims 1 to 3, wherein the anode reactor vessel (4) at least partially holds the electrolyte (6).

5. Reactor device (2) according to at least one of claims 1 to 4, wherein the anode reactor vessel (4) contains the electrolyte (6).

6. Reactor device (2) according to at least one of claims 1 to 5, wherein an anode reactor wall (5) of the anode reactor vessel (4) is at least partially permeable to allow a diffusion of oxygen ions (O²⁻) through the anode reactor wall (5).

7. Reactor device (2) according to at least one of claims 1 to 6, wherein the anode reactor vessel (4) is at least partially formed of an oxygen ion conducting ceramic material to allow for a transfer of the oxygen ions (O²⁻) towards an oxygen collecting reactor container (25) located outside of the anode reactor vessel (4).

8. Reactor device (2) according to at least one of claims 1 to 7, wherein at least a section of an anodic outer surface of the anode reactor vessel (4) is covered by an anodic electrode connecting material (18).

9. Reactor device (2) according to claim 8, wherein the anodic electrode connecting material (18) is at least partially provided as paste applied to the anodic outer surface.

10. Reactor device (2) according to claim 9, wherein the anodic electrode connecting material (18) is at least partially provided as composite material composed of ceramic and metal materials.

11. Reactor device (2) according to at least one of claims 8 to 10, wherein the anodic electrode connecting material (18) is at least partially provided as a mesh.

12. Reactor device (2) according to at least one of claims 8 to 11, wherein the anodic electrode connecting material (18) is at least partially provided as bath (28).

13. Reactor device (2) according to at least one of claims 8 to 12, wherein the bath (28) contains molten metal.

14. Conversion system (1) for converting powdered metal oxides, in particular metal oxides contained in regolith, to a metal powder and molecular oxygen (O₂), the conversion system (1) comprising at least one reactor device (2) according to at least one of claims 1 to 13.

15. Conversion system (1) according to claim 14, further comprising a powder cartridge (30) configured to be inserted into the cathode reactor vessel (8) and to hold the powdered metal oxides during conversion.
